# EUROPEAN PATENT SPECIFICATION

(11) **EP 0 766 809 B1**
(45) Date of publication and mention of the grant of the patent: **25.08.1999**
(21) Application number: 95923604.3
(22) Date of filing: 19.06.1995
(51) Int. Cl.: G01B 21/02

(54) **APPARATUS FOR MONITORING OVERHEAD ELECTRIC LINES**
GERÄT ZUR ÜBERWACHUNG VON ELEKTRISCHEN FREILEITUNGEN
APPAREIL POUR LE CONTROLE DE LIGNES ELECTRIQUES AERIENNES

(30) Priority: 20.06.1994 NO 942358
(43) Date of publication of application: 09.04.1997
(73) Proprietor: Hafslund ASA, 1701 Sarpsborg (NO)
(72) Inventor: IVERSEN, Haakon, N-1614 Fredrikstad (NO); MORDT, Helge, N-1671 Kr ker y (NO)
(74) Representative: Becker, Eberhard, Dr.
(86) International application number: NO9500106
(87) International publication number: WO9535478

(56) References cited:
- EP-A- 0 352 464
- US-A- 5 140 257
- US-A- 5 235 861

## Description

This invention relates to an apparatus for monitoring overhead electric lines being suspended in the form of conductors extending between poles or masts, in particular for detecting an inadmissible high temperature in a conductor under electric load, whereby the sag of the conductor is determined by employing a sensor device.

In the following description the term line denotes a single conductor of metal, in contrast to a geometrical line being a straight line between two points, or a power transmission line.

Existing protection against thermal overloading of lines and cables is based on measurement of the current flowing in the conductor, and on this background the thermal load is calculated. Moreover there have been developed standards with respect to how much various types of lines can be loaded. Both the standards and present protection are based on a number of assumptions. This must be done in order to be able to calculate the theoretical temperature obtained in a conductor at a given current through the conductor.

These assumptions are mainly as follows: A certain wind velocity, heat radiation to the surroundings (which again is depending upon the temperature of surrounding objects - houses, trees, clouds and so forth and the surface condition of the conductor), and possible radiation received from the sun (which depends on the level above the sea and the cloud coverage) and other sources of heat.

It is a fact that such assumptions will seldom be satisfied in the real world. Therefore in practical operation of power transmission lines there are utilized a good deal of safety margins in order to be on the safe side. If it is possible to measure a physical magnitude being independent of all these assumptions, being related to wind and weather, it will also be possible to utilize a line at higher loads than what is common today. When the load or consumption is steadily increasing from year to year, it will be necessary at a point of time calculated beforehand (on the basis of prognoses) to invest in a new power transmission line with a higher capacity.

It is an important object of this invention to provide a new measuring method making it possible to apply a load with a higher current value in an existing power line. Thereby it will be possible to postpone correspondingly the investment mentioned above.

Moreover the highest load will as a rule occur when the outdoor temperature is lowest. Usually the coldest day of the year is taken as a basis for replacement of a power transmission line. The largest discrepancy between the actual conditions and the assumptions discussed above, will be found on such cold days.

In order to avoid all these uncertain assumptions it will be possible to provide protection by taking advantage of the physical relationship that a line will be elongated at increasing temperature only as a function of material constants that can be measured physically. There is a known relationship between the sag of a line, the known weight of the line and the suspension force in the line when tensioned between two suspension points, and the temperature of the line. From these known relationships it is possible to calculate the sag of the line at varying temperatures. Previously this was a very cumbersome calculation, but today this can be performed quite simply by means of available calculation programs on a PC.

From US patent 5.140.257 there is known a system for determining the current carrying capability or the maximum current load in power lines or cables suspended in masts. Thus the US patent is directed to the same object and problems as the present invention. In the previously known system there is incorporated, inter alia, determination of the sag of the line by means of angle measurement in a suspension point and subsequent calculation. This is a cumbersome and inaccurate method for determining sag when monitoring the load condition of a current carrying line.

Another example of a monitoring system for similar purposes, is found in US patent 5.235.861. The monitoring therein is based on measurements of the tension in the line. Moreover reference is made to US patent 4.786.862 which describes a sensor module adapted to be mounted around a conductor or line for electric power transmission. Power supply for the module is derived directly from the conductor by electromagnetic induction.

In one of several possible embodiments the present invention employs, inter alia, a laser beam for the monitoring purpose concerned, and in that connection it is appropriate to mention that laser units and systems for a long time have been utilized for monitoring deformation and/or movement of large structures in particular. Examples of such use of laser beams are to be found inter alia, in the following patent specifications: DE 2.043.436, EP 352.464 and WO 85/00222. None of these known uses of laser beams have any practical interest in connection with suspended power transmission lines as referred to above.

In addition to the embodiment based on a laser beam as mentioned, the invention also comprises other embodiments being in general based on the employment of electromagnetic waves or acoustic waves, with use of a camera for imaging by means of visible or invisible light, as a very interesting embodiment.

Thus taking as a starting point the closest prior art, being represented by the above US patent 5.140.257, the novel and specific features of the apparatus according to the invention in the first place consist therein that the sensor device is sensitive to electromagnetic or acoustic waves so that the sag of the conductor is monitored by means of the electromagnetic or acoustic waves, the propagation or pattern of said electromagnetic or acoustic waves is adapted to be influenced by elongation of the conductor under load and thereby an increased sag.

The solution provided herewith is founded on the known physical-mathematical relationship between variations in the sag of a conductor and the temperature thereof. The variation of sag is monitored by means of an emitted laser beam, i.e. more generally by employing electromagnetic waves or acoustic waves the propagation or pattern of which can be changed. When a predefined limiting magnitude of the sag is exceeded, the changes are detected by one or more sensors mounted in predetermined positions or points. These points correspond to predefined temperature limits for the line concerned. Actuation of the sensor(s) in this manner leads to transmission of a corresponding signal to a monitoring or operating station or another form of automatic alarm or switch-off equipment.

Among the important advantages being obtained when using the apparatus according to the invention, the following are mentioned:
1. A better utilization of the capacity of the line and thereby also the technical lifetime of the line.
2. More reliable criteria for load limits under varying conditions in the surroundings. According to present usual practice such criteria are based on simple empiric assumptions.
3. Economically this new form of monitoring means that the capacity of a line can be better utilized. This again makes it possible to postpone investments for strengthening or rebuilding the line.
   The relationship between increased capacity and postponed investment is given by estimated prognoses with respect to an increasing total load in a power transmission network. The decision on such investment must be taken in good time beforehand because of extended procedures (concession treatment, ground proprietor agreements, expropriation etc.). In the light of these circumstances the uncertainty involved in the technical assumptions with respect to the load capability of the line is taken into account indirectly in such cases. With a protection based upon an apparatus according to the invention as described herein, this uncertainty can be reduced to a substantial degree. Employing this new apparatus the strengthening of lines can be carried out in sections where the cooling conditions are poorest. This means that additional postponement of parts of the investments in the network, can be obtained.
4. The accuracy of the protecting function will be independent of the accuracy of the components being used in the actual parts and units incorporated in the apparatus. (No analog simulation of measured magnitudes is performed). The accuracy will only depend on the existing physical conditions (not electrical) for the lines and the approximations which may have been made in the calculation programs utilized for determining line temperature.

In the following description the invention will be explained more closely with reference to exemplary embodiments being illustrated in a simplified and schematic manner in the drawings, wherein:
- Fig. 1: as a first alternative shows the monitoring of a line span between two poles or masts, as seen in elevation,
- Fig. 2: shows a corresponding elevation of a second alternative according to the invention,
- Fig. 3: shows a third alternative embodiment with a laser beam propagated transversally to the line span and with two separate poles for the monitoring apparatus,
- Fig. 4: shows an alternative related to the third alternative, but with only one separate pole for the monitoring apparatus,
- Fig. 5: shows an example of a design of a laser unit, in particular for use in the embodiment of Fig. 1,
- Fig. 6: serves to illustrate certain geometrical relationships in connection with the cross-sectional shape of the laser beam, and a reflector for the laser beam respectively,
- Fig. 7: shows an example of attachment of a reflector on a line, in particular intended for the above second alternative as illustrated in Fig. 2,
- Fig. 8: in a similar way as in Figs. 1 and 2 shows an embodiment of the invention based on a transmitter for electromagnetic or possibly acoustic waves, mounted on a line span,
- Fig. 9: shows a further embodiment of the invention based on a camera for monitoring a line span,
- Fig. 10: is a block diagram showing electronic and power supply circuits associated with a camera which can be comprised by the apparatus in Fig. 9, and
- Fig. 11: shows a schematic example of still another embodiment according to the invention, based on a line camera and cylinder optics.

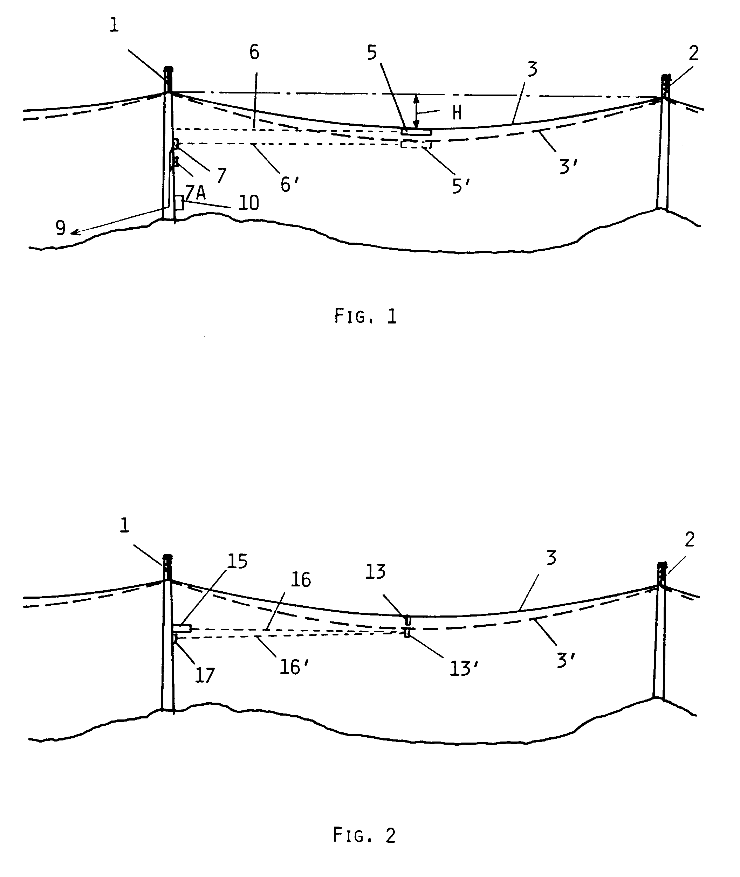

The situation illustrated in all Figs. 1-4 is based on a line span 3 between two poles or masts 1 and 2, whereby the power transmission line concerned continues to both sides as indicated in the drawings. With respect to line 3 in Fig. 1 there is indicated what is defined as sag H. As known this is measured vertically downwards with respect to the straight line (dot-dash line in Fig. 1) between supension points for line 3 in both masts 1 and 2. In Fig. 1-4 it is indicated with a dashed line and with reference numeral 3' how line 3 can be elongated to assume a lower curve with a larger sag than the indicated sag H, in consequence of the load to which the line is subjected, in particular electric load in the form of increased current which leads to a higher temperature and thus an elongation of the line.

The alternative embodiments shown in Figs. 1-4 respectively, shall be explained more closely as follows:

### Alternative 1 - Fig. 1:

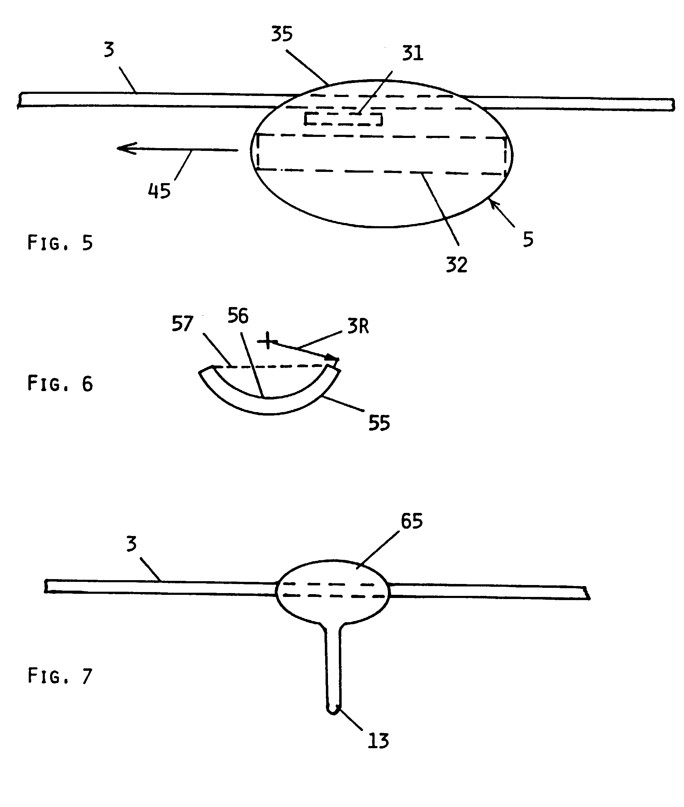

At the lowest point of line 3 between the two masts 1 and 2 there is mounted a laser unit 5 which emits a laser beam 6 when a current of sufficient amplitude flows in the line. As explained more closely below with reference to Fig. 5, laser unit 5 can with great advantage be energized from the line 3 in which it is suspended. Laser beam 6 is directed towards one (1) of the masts in which line 3 is suspended. The beam 6 is shaped so that for usually occuring excursions of line 3 there will always be an illuminated line or arch transversally of a given portion of mast 1. This has to do with the cross-sectional shape of the laser beam 6, which is to be explained more closely below with reference to Fig. 6.

When the load, in particular the temperature of line 3 increases, the illuminated linear spot on mast 1 will move downwards. The relationsip between this movement and the temperature change in the line may be calculated by means of known formula or existing calculation programs. If a region of the masts is provided with a scale according to such calculations, the average temperature of line 3 in the span concerned can be read out. More important (and more useful) it is however to be able to automatically record when a predefined critical temperature is obtained (e.g. 80-90°C).

This situation can be considered to be represented by the dashed line 3', where the laser unit position 5' implies the propagation of laser beam 6' at a lower level than laser beam 6 in the initial position.

At a calculated point on mast 1 corresponding to the critical temperature, there is mounted a sensor 7 adapted to receive laser beam 6'. When the laser beam hits sensor 7, a signal indicating the condition occuring, can be provided in a manner known per se. The signal is transferred either to an operation central with operators or a remote control system gives a direct automatic command to the effect that a switch at the end of line 3 is opened before a dangerous situation can arise. If an alert is desired at more than one temperature level, this can easily be implemented by mounting a sensor for each level at the point on mast 1 corresponding to the temperatures for which an alert is desired. At 7A there is shown another such sensor being located at a lower height than sensor 7.

One or more sensors 7, 7A on mast 1 are connected to a cable 9 as shown, for transferring the output signal of the sensors to a remote operational or monitoring station. In a particular embodiment according to the invention these output signals are in the form of laser light derived directly from the laser beam 6' received by the sensor 7 concerned, so that this sensor can be of a simple design without means for converting received laser light to electrical signals. In such case the cable 9 is a fiberoptic cable. Finally Fig. 1 shows a control box 10 being mounted on mast 1 and being in actual practice usually required in a total installation of the monitoring apparatus, whereby control box 10 can also normally be connected to cable 9, possibly separate electric conductors in a fiberoptic cable.

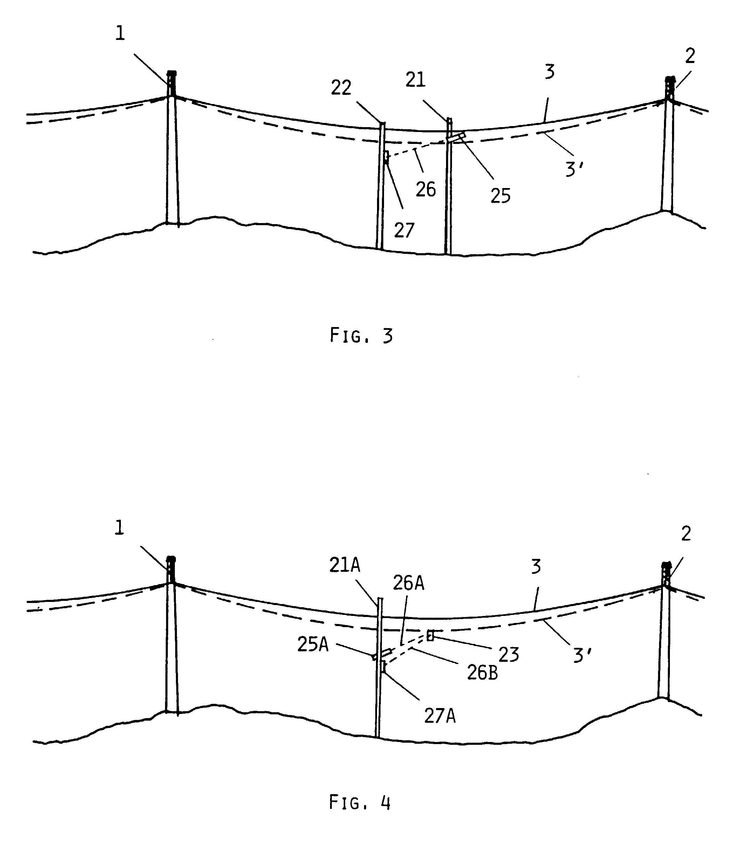

### Alternative 2 - Fig. 2:

A unit 15 emitting a laser beam 16 is here mounted on one (1) of the masts in the span concerned. At the lowest point of line 3 there is attached a reflector 13 which can direct laser beam 16' to a sensor 17 on the same mast 1 which carries laser unit 15. The beam 16 must be so aligned that when line 3 has a sag corresponding to the critical temperature for the line, reflector 13' breaks into the beam and directs it to sensor 17 which converts the light into a signal being transferred in the same manner as in alternative 1.

### Alternative 3 - Fig. 3:

A laser unit 25 is mounted on a separate mast 21 laterally of the power line 1, 2, 3 at a predetermined distance from line 3. A laser beam 26 is directed transversally of the line at the level corresponding to the sag of the line at the critical temperature. When the critical temperature is attained, line 3' (possibly a reflector mounted thereon) will break beam 26 which will be received by an appropriately positioned sensor 27 on a separate mast 22 at the opposite side. Transfer of the signal will be implemented in the same way as for alternatives 1 and 2. Thus at the critical temperature the output signal from sensor 27 in this alternative will be due to disappearance of an incomming laser beam 26 to the sensor.

### Alternative 4 - fig. 4:

This is a variant of alternative 3, with only one pole 21A carrying a laser unit 25A, whereas line 3 is provided wiht a reflector 23. A sensor 27A mounted on the same pole 21A serves to receive a resulting reflected laser beam 26B when the emitted laser beam 26A on a lowered line 3' in consequence of the total load thereon, in particular the electric load discussed above.

Fig. 5 shows somewhat more in detail the laser unit 5 supported by line 3, corresponding to the alternative of fig. 1. The unit has a much rounded outer shape as represented by a casing 35 in fig. 5. The casing can for example be shaped substantially as an ellipsoide, having attachment members for example in the form of a clamp device at the upper part, for mounting on line 3. At 32 there is indicated a screen device for protecting components in the laser unit against electric and possibly magnetic fields surrounding line 3 during operation. Thus the actual laser component can be located inside the screen 32. With arrow 45 there is indicated a laser beam being emitted by the laser unit. As mentioned above it is a substantial advantage that laser unit 5 can have its power supply from line 3 when this carries a current, and for this purpose there is shown at 31 means for this coupling to line 3, i.e. preferably an inductive coupling so as to derive necessary power for the laser unit from line 3 itself.

Fig 6. illustrates certain geometrical relationships in connection with the situation where line 3 can have lateral excursions, which in particular will be due to transverse wind influence. These geometrical relationships apply both in alternative 1 as illustrated in fig. 1, and in alternative 2 as illustrated in fig. 2. Thus in the first case laser unit 5 will be swung out together with line 3, and this in the principle along the arc of a circle with the sag H as a radius and with the centre located on the straight line between the suspension points for the power line at the two masts 1 and 2. In order that laser beam 6 and possibly beam 6' shall hit mast 1 and particular sensor 7 even if the line has an excursion from the normal middle position, it is a substantial advantage that laser beam 6 has a cross section with a certain extension laterally, namely most favourably an arcuate shape as illustrated in fig. 6. The arcuate shape is shown therein with a lower or outer arc contour 55 and an inner arc 56 which over a suffisiently large angular range form main borders of the laser beam cross section. The radius 3R shown for this arcuate cross section thus shall correspond substantially to the sag H concerned, i.e. when the cross section of the laser beam is considered in the region of mast 1. As will be realized it is this lower bordering contour 55 of the beam cross section which has a decisive significance for the purpose of detecting a critical sag corresponding to line curve 3' in fig. 1. Accordingly the inner or upper border of the laser beam geometry or cross sectional shape, can for example be as shown with a dotted line 57 instead of the arc 56.

In the second alternative of fig. 2 the geometrical relationships as discussed immediately above, can apply to the reflector 13 in a fully corresponding manner. In order that laser beam 16 in fig. 2 shall hit reflector 13, i.e. in reflector position 13' with line 3' as swung out, alongated and lowered, the reflector must have a lateral extension, namely with the preferred cross sectional shapes being explained with respect to the laser beam with reference to fig. 6.

Finally fig. 7 shows how the reflector 13 with advantage can have a rigid attachment to line 3, whereby the attachment member 65 for reflector 13 has a certain extension in the longitudional direction of line 3 for clamping thereof along such a length. It is to be noted that attachment member 65 has a well rounded shape, this being for the same reason as the casing 35 for laser unit 5 in fig. 5 is rounded. In fig. 7 the reflector is shown from the side, but it will be realized that the reflecting surface can be shaped according to the advantagous geometry being explained above in connection with fig. 6. The arcuate shape, in particular as represented by contoure 55 in fig. 6, will additionally contribute to avoiding undesired potential concentrations at reflector 13.

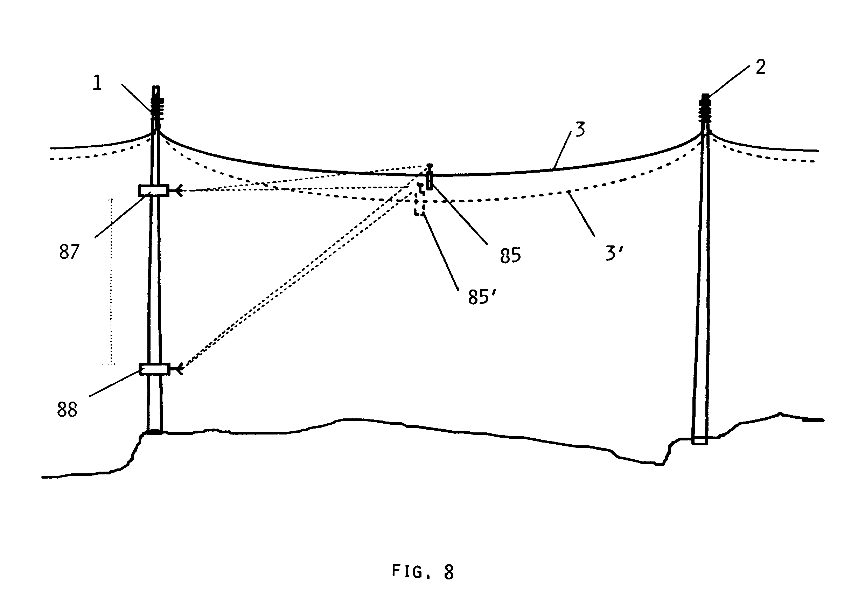

In the embodiment of fig. 8 there are again two masts 1 and 2 and a line 3 as in the preceding figures of drawings. Preferably at a middle portion of line 3 there is here mounted a transmitter unit 85 for electromagnetic waves, possibly acoustic waves, which can well be ultrasound waves. If electromagnetic (radio) waves are used, two receivers or sensors 87 and 88 on mast 1 are adapted to receive the emission from unit 85 and in cooperation to determine a time difference between waves received by the respective receivers 87 and 88. The height spacing between these two receivers 87 and 88 on mast 1 is a known magnitude, and based on principles being known per se it is thereby possible in a sufficiently accurate manner to determine the position of transmitter unit 85. When the sag is changed, for example to the position of the line being indicated at 3', the transmitter unit will assume another position 85', which leads to a corresponding change in the time difference at receivers 87 and 88. The resulting output signal which represents the position or height change of transmitter unit 85, is then delivered to a measuring station or the like for further prosessing and possible action. It is obvious that a fully analogous manner of operation can be based on the emission of ultrasound waves instead of electromagnetic waves from transmitter unit 85. Evidently in such case receiver sensors 87 and 88 must be adapted to detect the sound waves.

Transmitter unit 85 can emit a continuous wave signal and the time difference referred to above can be determined from the phase relationships at receiver sensors 87 and 88. Position determination, i.e. the sag can also be determined by means of known methods on the basis of a pulse signal from transmitter unit 85.

An important advantage in practical operations with embodiments corresponding to fig. 8, is that the sag can be recorded continuously over time, whereas most of the embodiments on the basis of fig. 1-4 give a point detection, where there may be a problem to decide whether the line is located above or below the detection point.

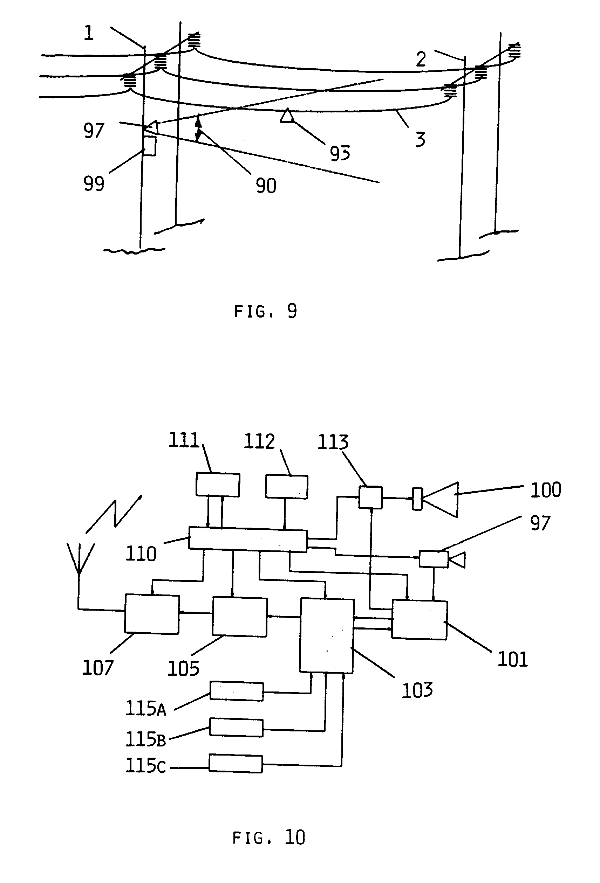

In fig. 9 there is illustrated a power transmission line with 3 conductors (phases), of which one is denoted 3, as in the previously described embodiments. For the line span 3 there is also shown masts 1 and 2. On mast 1 there is mounted a video camera 97 having a field of view 90 so directed that preferably a middle portion of line 3 is located within the field of view. This portion of line 3 is provided with an object 93 adapted to be imaged by camera 97. The object or figure 93 should have a well defined geometrical shape being suitable for a secure and reliable detection by means of camera 97, which here consitutes a sensor device. An electronics unit 99 is also shown on mast 1 in association with camera 97.

Images being recorded by the camera will in a manner known per se be processed digitally by using a suitable image processing algorithm, in order to search for the particular geometrical figure in the image. The height of the line, i.e. also the sag can then be calculated from the position of the figure in the image concerned.

Digital video cameras 97 which can be employed here, typically will have a resolution of 512 x 582 points, and if there is chosen a lense giving a field of view of 20 x 22,7 meters, there will be obtained a minimum resolution of 4 cm. The geometrical figure to be suspended on line 3 therefore should have a lateral dimension of minimum 40 cm so as to be visible for the camera in a way making it possible to detect the figure or object. The accuracy of the measurement according to this camera-based embodiment is expected to be +/- 10 - 20 cm, which depends on the field of view and the lense optics in camera 97.

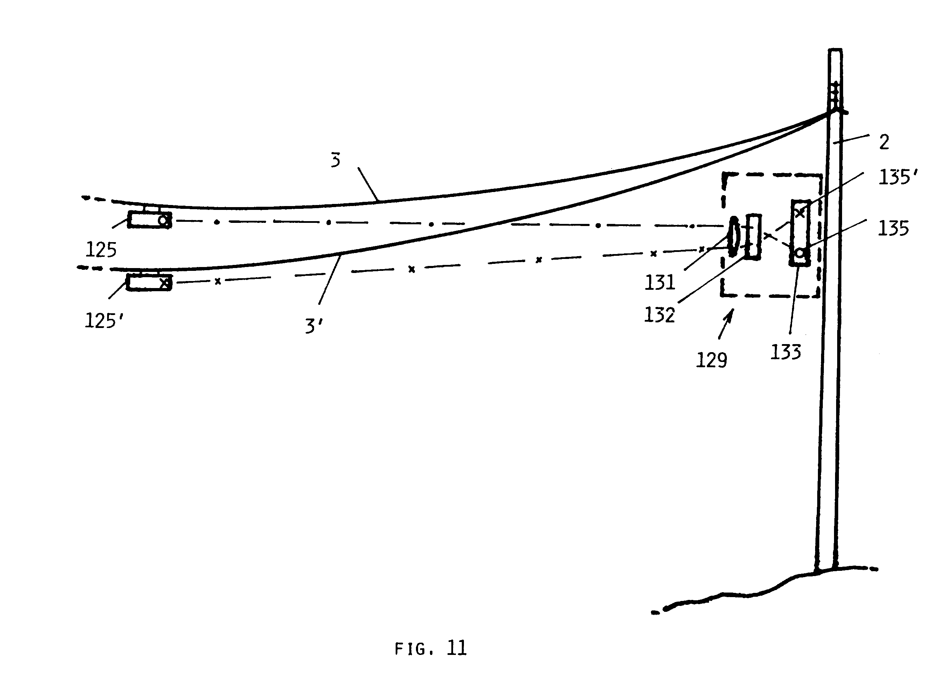

Necessary processing or image treatment based on the output signals from video camera 97 in fig. 9, can take place in a unit according to the block diagram in fig. 10. The components here can be comprised in part or completely by the electronics unit 99 in fig. 9.

As camera 97 there can for example be employed a CCD camera. This delivers digital output signals to an image storing device (frame grabber) 101 in a manner previously known, as a first step of the processing. Block 103 represents a suitably programmed computer, which can well be built on one circuit board, for cooperation with image store 101 and other components in the system, as will be seen form the block diagram in fig 10. Computer 103 can be considered to provide for the central control of the whole image processing unit and possibly also camera 97 itself.

The program for computer 103 can be based on available program modules being linked together. There is here the question of processing or image treating algorithms, inter alia for pattern recognition, being per se known or obvious to experts in the field.

Information being the result of the processing can be transferred via modem 105 and a radio transmitter 107 for example to an operation central or the like for the electrical power distribution. Pure still images for camera 97 - image store 101 may be transferred on a low speed channel over radio. Besides fig. 10 shows sensors 115A-C for other types of measuring magnitues than the sag, which can also be connected to computer 103 for transferring corresponding information signals over the same channel (modem 105 - radio 107).

The power supply in the block diagram comprises a central current supply unit 110, a battery 111, energy supply (external) 112, and a particular current supply circuit 113 for a light projector or flash lamp 100.

Lamp 100 is not shown in fig. 9, since camera 97 in the principle may be able to operate satisfactorily only by means of existing ambient light, in particular daylight. For monitoring line 3 under poor light conditions, in particular during the night, it is an essential advantage to provide artificial illumination in the form of a light projector or blitz light 100 as shown in fig. 10. This is preferably synchronized with camera 97 and image store 101, so that images are recorded and stored under optimal light conditions. Required ilumination can also be provied for by a laser or another form of light source.

A particular form of video camera which in some instances can be advantageous in the practical use of the invention, is a so-called line camera. As known the line cameras provide for imaging in the principle along a line instead of being over an image plane. In the present connection it is moreover a great advantage to combine a line camera with cylinder optics. This form of camera requires a light source to be imaged, preferably a laser unit, i.e. a form of unit or component being already referred to above. Specifically it is remarked here that the fundamental arrangement shown in fig 1 can very well be used in the case of a line camera solution as mentioned here. In such case it is not decisive that the beam 6 from laser unit 5 constitutes a "line of sight".

A line camera with simultaneous use of cylinder optics having in the principle a vertical axis, opens up for an extended detection range. In a known maner cylinder optics will concentrate all points in a sector into a line. This solution involves the possibility of a more precise detection of a varying sag, since the point by which the light source or the laser is imaged, can be used as a basis for taking advantage of the difference in intensity. This embodiment will give a continuous measurement of sag within a sector.

Fig. 11 in a schematic and simplified way shows an example of an embodiment based on a line camera. In a pole 2 a line camera generally denoted 129 is suspended for monitoring a line 3, whereby only approximately one half of the line span is shown. In line 3 there is mounted a transmitter unit 125 in the form of a light source, in particular a laser, which is located in the field of view of line camera 129. The power line is shown in another position 3' where the sag has increased, whereby the laser unit has been displaced correspondingly downwards to the position 125'. From the respective positions of laser unit 125 it is indicated with different dot-dash lines how the beam propagation is directed into camera 129. In combination this camera can comprise more or less usual objective optics 131 and cylinder optics 132 as mentioned above. Imaging takes place in a field or plane 133 which can be relatively narrow and has a certain extension in vertical direction. A light point representing laser unit 125 in the upper position, will be imaged for example as a point 135 in the imaging plane 133, whereas the light point from the laser unit in the position 125', will be imaged at 135' in the imaging plane 133. By means of suitable detector elements associated with imaging plane 133, it will thus be possible to carry out the continuous measurement of the sag of line 3.

It is clear that the fundamental idea on which the invention is based, makes possible modifications and variants in relation to the exemplary embodiments being described and shown here. Among other things the transmitter units, reflectors or imaging objects need not be located at the middle of a line span, but can be displced from the middle portion depending on the local conditions, such as terrain formations, buildings and so forth in the neighbourhood of the power transmission line. Particular situations as for example fjord spans or power lines installed at other inaccessible places, may also lead to modifications of the total arrangement of sensor device and possibly the transmitter unit. As regards signal processing as in particular discussed in connection with the camera embodiment, there can also in addition to processing as mentioned, be employed additional and other forms of signal processing, such as filtering, correlation techniques based on pulse emission from the transmitter units and so forth.

## Claims

1. Apparatus for monitoring overhead electric lines being suspended in the form of conductors (3) extending between poles or masts (1, 2), in particular for detecting an inadmissible high temperature in a conductor (3) under electric load, whereby the sag (H) of the conductor (3) is determined by employing a sensor device (7, 17, 27, 87, 88, 97),
**characterized in that**
the sensor device (7, 17, 27, 87, 88, 97) is sensitive to electromagnetic or acoustic waves so that the sag (H) of the conductor (3) is monitored by means of the electromagnetic or acoustic waves, the propagation or pattern of said electromagnetic and acoustic waves is adapted to be influenced by elongation of the conductor (3) under load.

2. Apparatus according to claim 1,
**characterized in** that
a transmitter unit (5,85) for said waves is mounted on the conductor (3), preferably at the lowest point of the line span, and
that power supply to the transmitter unit is adapted to be taken from the conductor itself through magnetic and/or electric fields around the conductor.

3. Apparatus according to claim 1 or 2,
**characterized in** that the sensor device (7,7A,17,87,88,97) is mounted on a mast (1) which carries one end of the line span.

4. Apparatus according to claim 1 or 2,
**characterized in** that the sensor device (27,27A) is mounted on a separate pole (22,21A) or another supporting structure laterally of the conductor (3).

5. Apparatus according to claim 3 or 4,
**characterized in** that the sensor device comprises at least two sensors (7,7A,87,88) mounted at different heights.

6. Apparatus according to any one of claims 2-5,
**characterized in** that the transmitter unit (5) has a rounded outer shape in order to avoid as known per se, electrical potential concentrations.

7. Apparatus according to any one of claims 2-6,
**characterized in** that the transmitter unit (5) comprises a screen device (32) for protecting components in the transmitter unit against electric and/or magnetic fields from the conductor (3).

8. Apparatus according to any one of claims 2-7,
**characterized in** that the transmitter unit is a laser unit (5, 25) adapted to cooperate with the sensor device (7,17,27), which is sensitive to a laser beam (6,16,26) emitted by the laser unit, the path (6',16',26) of the laser beam being influenced by elongation of the conductor (3) under load and thereby an increased sag (H), and the laser beam being preferably adapted to be swept in space, and possibly pulsed.

9. Apparatus according to claim 8,
**characterized in** that the laser unit (5,25) is normally aimed at the mast or pole (1,22), preferably at a point higher thereon than the height of the sensor device (7,27) on the mast or pole.

10. Apparatus according to claim 1,
**characterized in**
that a laser unit (15) as well as the sensor device (17) are mounted on a mast (1) which carries one end of the line span, with the laser beam (16) aligned with and having a given distance underneath the lowest portion of the line span (3), and
that a reflector (13) for the laser beam (16) is mounted at said lowest portion.

11. Apparatus according to claim 1,
**characterized in** that a laser unit (25,25A) is mounted on a separate pole (21,21A) or another supporting structure laterally of the conductor (3), with the laser beam (26,26A) directed generally transversally at a given distance underneath the conductor (3).

12. Apparatus according to any one of claims 8-11,
**characterized in** that output signals in the form of laser light from the sensor device (7,7A) are transmitted directly to a remote monitoring station through fiber optic cables (9).

13. Apparatus according to claim 8, 9, 10 or 12,
**characterized in** that the laser unit (5,15) is adapted to emit a laser beam (6,16) having at least in the lower portion a downwardly arcuate cross-sectional shape (55), preferably with a radius (3R) corresponding to the sag (H) to be detected.

14. Apparatus according to any one of claims 10, 12 or 13,
**characterized in** that the reflector (13) is rigidly attached (65) to the conductor (3).

15. Apparatus according to any of claims 10, 12 or 14,
**characterized in** that the reflecting surface of the reflector (13) at least in the lower portion has a downwardly arcuate shape (55) with a radius (3R) corresponding to the sag (H) to be detected and with its center substantially on the straight line through the suspension points of the line span on the two masts (1,2).

16. Apparatus according to claim 11, 12 or 14,
**characterized in**
that the sensor device (27A) is mounted on the same pole (21A) as the laser unit (25A), and
that a reflector (23) is mounted on the conductor (3).

17. Apparatus according to claim 11, 12 or 14,
**characterized in** that the sensor device (27) is mounted on another separate pole (22) at the opposite side of the conductor (3) in relation to the pole (21) for the laser unit (25).

18. Apparatus according to claim 2 and 5 and possibly one of claims 6 and 7,
**characterized in** that the transmitter unit (85) is adapted to emit radio waves or ultrasound waves and that the time difference of the waves when arriving at at least two sensors (87,88), is taken as a basis for determining sag, whereby the spacing between the sensors (87,88) is known.

19. Apparatus according to claim 1 and possibly 3, 4 or 5,
**characterized in**
that the sensor device has the form of a camera (97),
that an imaging object (93) having a well defined geometrical shape is mounted on the conductor (3) in the field of view (90) of the camera, preferably at the lowest point of the line span, and
that in association with the camera (97) there are provided means (101,103) for image processing or pattern recognition in a manner known per se, for determining the sag (H).

20. Apparatus according to claim 19,
**characterized by** a transmitter unit (100) for illuminating the imaging object (93), preferably in the form of flash light.

21. Apparatus according to any one of claims 2-7,
**characterized in** that the transmitter unit is a light source, preferably a laser unit (125) and that the sensor device is a line camera (129) combined with cylinder optics (132) with a vertically oriented axis.

## Patentansprüche

1. Vorrichtung zur Überwachung elektrischer Oberleitungen, die in Form von Leitungen (3) zwischen Pfosten oder Masten (1, 2) hängen, insbesondere zum Nachweis einer unzulässig hohen Temperatur in einem Leiter (3) unter elektrischer Ladung, wobei der Durchhang (H) des Leiters (3) unter Verwendung einer Erfassungsvorrichtung (7, 17, 27, 87, 88, 97) bestimmt wird, dadurch gekennzeichnet, daß
die Erfassungsvorrichtung (7, 17, 27, 87, 88, 97) gegenüber elektromagnetischen oder akustischen Wellen empfindlich ist, so daß der Durchhang (H) des Leiters (3) mittels der elektromagnetischen oder akustischen Wellen überwacht wird, wobei die Ausbreitung oder das Muster der elektromagnetischen und akustischen Wellen so angepaßt ist, daß sie/es durch eine Verlängerung des Leiters unter Ladung beeinflußt wird.

2. Vorrichtung nach Anspruch 1, dadurch gekennzeichnet, daß
eine Übertragungseinheit (5, 85) für die Wellen an dem Leiter (3) vorzugsweise am niedrigsten Punkt der freitragenden Leitungslänge angebracht ist und daß die Stromversorgung für die Übertragungseinheit so angepaßt ist, daß er durch magnetische und/oder elektrische Felder um den Leiter herum von dem Leiter selbst abgenommen wird.

3. Vorrichtung nach Anspruch 1 oder 2, dadurch gekennzeichnet, daß
die Erfassungsvorrichtung (7, 7A, 17, 87, 88, 97) an einem Masten (1) befestigt ist, der ein Ende der freitragenden Leitungslänge trägt.

4. Vorrichtung nach Anspruch 1 oder 2, dadurch gekennzeichnet, daß
die Erfassungsvorrichtung (27, 27A) auf einem getrennten Pfosten (22, 21A) oder einem anderen, neben dem Leiter (3) befindlichen Trägeraufbau angebracht ist.

5. Vorrichtung nach Anspruch 3 oder 4, dadurch gekennzeichnet, daß
die Erfassungsvorrichtung mindestens zwei Sensoren (7, 7A, 87, 88) aufweist, die in verschiedenen Höhen angebracht sind.

6. Vorrichtung nach einem der Ansprüche 2 bis 5, dadurch gekennzeichnet, daß
die Übertragungseinheit (5) eine gerundete äußere Form aufweist, um, wie an sich bekannt, eine Ansammlung elektrischen Potentials zu vermeiden.

7. Vorrichtung nach einem der Ansprüche 2 bis 6, dadurch gekennzeichnet, daß
die Übertragungseinheit (5) eine Abschirmvorrichtung (32) enthält, um die Übertragungseinheit vor elektrischen und/oder magnetischen Feldern des Leiters (3) zu schützen.

8. Vorrichtung nach einem der Ansprüche 2 bis 7, dadurch gekennzeichnet, daß
die Übertragungseinheit eine Lasereinheit (5, 25) ist, die so angepaßt ist, daß sie mit der Erfassungsvorrichtung (7,17,27) in Verbindung steht, die gegenüber einem Laserstrahl (6, 16, 26), der von der Lasereinheit emittiert wird, empfindlich ist, wobei der Weg (6', 16', 26') des Laserstrahls durch die Verlängerung des Leiters (3) unter Ladung und den dadurch vergrößerten Durchhang (H) beeinflußt wird, und wobei der Laserstrahl vorzugsweise derart angepaßt ist, daß er den Raum überstreicht und nach Möglichkeit pulsiert.

9. Vorrichtung nach Anspruch 8, dadurch gekennzeichnet, daß
die Lasereinheit (5, 25) üblicherweise auf den Masten oder Pfosten (1, 22) gerichtet ist, vorzugsweise auf einen Punkt daran, der über der Höhe der Erfassungsvorrichtung (7, 27) an dem Masten oder Pfosten liegt.

10. Vorrichtung nach Anspruch 1, dadurch gekennzeichnet, daß
eine Lasereinheit (15) sowie die Erfassungsvorrichtung (17) an einem Masten (1) angebracht sind, welcher ein Ende der freitragenden Leitungslänge trägt, wobei der Laserstrahl (16) damit ausgerichtet ist und einen bestimmten Abstand zu dem untersten Bereich der freitragenden Leitungslänge (3) aufweist, und daß
ein Reflektor (13) für den Laserstrahl (16) an diesem untersten Bereich angebracht ist.

11. Vorrichtung nach Anspruch 1, dadurch gekennzeichnet, daß
eine Lasereinheit (25, 25A) an einem getrennten Pfosten (21, 21A) oder einem anderen Trägeraufbau neben dem Leiter (3) angebracht ist, wobei der Laserstrahl (26, 26A) im allgemeinen in einem bestimmten Abstand unterhalb des Leiters (3) transversal dazu ausgerichtet ist.

12. Vorrichtung nach einem der Ansprüche 8 bis 11, dadurch gekennzeichnet, daß
Ausgangssignale in Form von Laserlicht von der Erfassungsvorrichtung (7, 7A) direkt über Glasfaserkabel (9) zu einer entfernten Überwachungsstation übertragen werden.

13. Vorrichtung nach einem der Ansprüche 8, 9, 10 oder 12, dadurch gekennzeichnet, daß die Lasereinheit (5, 15) derart angepaßt ist, daß sie einen Laserstrahl (6, 16), der zumindest im unteren Bereich eine nach unten gekrümmte Querschnittsform (55) aufweist, vorzugsweise mit einem Radius (3R), der dem zu erfassenden Durchhang (H) entspricht.

14. Vorrichtung nach einem der Ansprüche 10, 12 oder 13, dadurch gekennzeichnet, daß der Reflektor (13) an dem Leiter (3) fest angebracht ist.

15. Vorrichtung nach einem der Ansprüche 10, 12 oder 14, dadurch gekennzeichnet, daß die reflektierende Oberfläche des Reflektors (13) zumindest im unteren Bereich eine nach unten gekrümmte Querschnittsform (55) aufweist, vorzugsweise mit einem Radius (3R), der dem zu erfassenden Durchhang (H) entspricht und wobei das Zentrum im wesentlichen auf der Geraden durch die Aufhängepunkte der freitragenden Leitungslänge an den beiden Masten (1, 2) liegt.

16. Vorrichtung nach Anspruch 11, 12 oder 14, dadurch gekennzeichnet, daß
die Erfassungsvorrichtung (27A) an dem gleichen Pfosten (21A) wie die Lasereinheit (25A) angebracht ist und daß ein Reflektor (23) an dem Leiter (3) angebracht ist.

17. Vorrichtung nach Anspruch 11, 12 oder 14, dadurch gekennzeichnet, daß
die Erfassungsvorrichtung (27) an einem anderen, getrennten Pfosten (22), bezogen auf den Pfosten (21) für die Lasereinheit (25) auf der anderen Seite des Leiters (3) angebracht ist.

18. Vorrichtung nach einem der Ansprüche 2 und 5 und nach Möglichkeit einem von 6 und 7, dadurch gekennzeichnet, daß
die Übertragungseinheit (85) derart angepaßt ist, daß sie Radio- oder Ultraschallwellen emittiert und daß der Zeitunterschied der Wellen beim Eintreffen bei mindestens zwei Sensoren (87, 88) als Basis zur Bestimmung des Durchhängens verwendet wird, wobei der Abstand zwischen den Sensoren (87, 88) bekannt ist.

19. Vorrichtung nach Anspruch 1 und gegebenenfalls 3, 4 oder 5, dadurch gekennzeichnet, daß
die Erfassungsvorrichtung die Form einer Kamera (97) hat, daß
ein Abbildungsobjekt (93), mit einer gut definierten geometrischen Form im Gesichtsfeld (90) der Kamera auf dem Leiter (3) angebracht ist, vorzugsweise am tiefsten Punkt der freitragenden Leitungslänge, und daß
in Verbindung mit der Kamera (97) Mittel (101, 103) für die Bildverarbeitung oder Mustererkennung in einer an sich bekannten Art und Weise zur Verfügung gestellt werden, um den Durchhang (H) zu bestimmen.

20. Vorrichtung nach Anspruch 1, gekennzeichnet durch eine Übertragungseinheit (100) zur Beleuchtung des Abbildungsobjekts (93), vorzugsweise in Form eines Blitzlichtes.

21. Vorrichtung nach einem der Ansprüche 2 bis 7, dadurch gekennzeichnet, daß
die Übertragungseinheit eine Lichtquelle, vorzugsweise eine Lasereinheit (125), ist und daß die Erfassungsvorrichtung eine mit einer Zylinderoptik (132) mit vertikal ausgerichteter Achse verbundene Leitungskamera (129), ist.

## Revendications

1. Appareil de contrôle de lignes électriques aériennes suspendues sous forme de conducteurs (3) s'étendant entre des pylônes ou des poteaux (1, 2), en particulier pour détecter une température excessivement élevée dans un conducteur (3) sous une charge électrique, de sorte que le fléchissement (H) du conducteur (3) est déterminé en utilisant un dispositif de détection (7, 17, 27, 87, 88, 97),
caractérisé en ce que
le dispositif de détection (7, 17, 27, 87, 88, 97) est sensible à des ondes électromagnétiques ou acoustiques de sorte que le fléchissement (H) du conducteur (3) est contrôlé au moyen des ondes électromagnétiques ou acoustiques, la propagation ou le modèle desdites ondes électromagnétiques et acoustiques est conçue pour subir l'influence de l'allongement du conducteur (3) sous la charge.

2. Appareil selon la revendication 1,
caractérisé en ce que
un émetteur (5, 85) pour lesdites ondes est monté sur le conducteur (3), de préférence au niveau du point le plus bas de la portée de la ligne, et
une alimentation en courant de l'émetteur est conçue pour être prise sur le conducteur lui-même par des champs magnétiques et/ou électriques autour du conducteur.

3. Appareil selon la revendication 1 ou 2,
caractérisé en ce que le dispositif de détection (7, 7A, 17, 87, 88, 97) est monté sur un poteau (1) qui porte une extrémité de la portée de la ligne.

4. Appareil selon la revendication 1 ou 2,
caractérisé en ce que le dispositif de détection (27, 27A) est monté sur un pylône distinct (22, 21A) ou une autre structure de support de façon latérale par rapport au conducteur (3).

5. Appareil selon la revendication 3 ou 4,
caractérisé en ce que le dispositif de détection comprend au moins deux capteurs (7, 7A, 87, 88) montés à des hauteurs différentes.

6. Appareil selon l'une quelconque des revendications 2 à 5,
caractérisé en ce que l'émetteur (5) a une forme extérieure arrondie afin d'éviter, comme on le sait en soi, des concentrations de potentiel électrique.

7. Appareil selon l'une quelconque des revendications 2 à 6,
caractérisé en ce que l'émetteur (5) comprend un dispositif de blindage (32) pour protéger les composants de l'émetteur contre les champs électriques et/ou magnétiques en provenance du conducteur (3).

8. Appareil selon l'une quelconque des revendications 2 à 7,
caractérisé en ce que l'émetteur est une unité à laser (5, 25) conçue pour coopérer avec le dispositif de détection (7, 17, 27), qui est sensible à un faisceau laser (6, 16, 26) émis par l'unité à laser, le trajet (6', 16', 26) du faisceau laser subissant l'influence de l'allongement du conducteur (3) sous la charge et, de ce fait, d'un fléchissement augmenté (H), et le faisceau laser étant, de préférence, conçu pour être balayé dans l'espace, et éventuellement pulsé.

9. Appareil selon la revendication 8,
caractérisé en ce que l'unité à laser (5, 25) est normalement pointée sur le poteau ou pylône (1, 22), de préférence à un point plus élevé sur ce dernier que la hauteur du dispositif de détection (7, 27) sur le poteau ou pylône.

10. Appareil selon la revendication 1,
caractérisé en ce que
une unité à laser (15) aussi bien que le dispositif de détection (17) sont montés sur un poteau (1) qui porte une extrémité de la portée de la ligne, le faisceau laser (16) étant aligné avec et ayant une distance donnée au-dessous de la partie la plus basse de la portée de la ligne (3), et
un réflecteur (13) pour le faisceau laser (16) est monté au niveau de ladite partie la plus basse.

11. Appareil selon la revendication 1,
caractérisé en ce qu'une unité à laser (25, 25A) est montée sur un pylône distinct (21, 21A) ou une autre structure de support de façon latérale par rapport au conducteur (3), le faisceau laser (26, 26A) étant dirigé globalement de façon transversale à une distance donnée au-dessous du conducteur (3).

12. Appareil selon l'une quelconque des revendications 8 à 11,
caractérisé en ce que des signaux de sortie sous la forme de lumière laser en provenance du dispositif de détection (7, 7A) sont directement transmis à un poste de contrôle distant par l'intermédiaire de câbles à fibres optiques (9).

13. Appareil selon la revendication 8, 9, 10 ou 12,
caractérisé en ce que l'unité à laser (5, 15) est conçue pour émettre un faisceau laser (6, 16) ayant au moins dans la partie inférieure une forme en coupe transversale en arc vers le bas (55), de préférence avec un rayon (3R) correspondant au fléchissement (H) à détecter.

14. Appareil selon l'une quelconque des revendications 10, 12 ou 13,
caractérisé en ce que le réflecteur (13) est fixé de façon rigide (65) au conducteur (3).

15. Appareil selon l'une quelconque des revendications 10, 12 ou 14,
caractérisé en ce que la surface réfléchissante du réflecteur (13), au moins dans la partie inférieure, a une forme d'arc vers le bas (55) avec un rayon (3R) correspondant au fléchissement (H) à détecter et son centre étant sensiblement sur la ligne droite passant par les points de suspension de la portée de la ligne sur les deux poteaux (1, 2).

16. Appareil selon la revendication 11, 12 ou 14,
caractérisé en ce que
le dispositif de détection (27A) est monté sur le même pylône (21A) que l'unité à laser (25A), et
un réflecteur (23) est monté sur le conducteur (3).

17. Appareil selon la revendication 11, 12 ou 14,
caractérisé en ce que le dispositif de détection (27) est monté sur un autre pylône distinct (22) au niveau du côté opposé du conducteur (3) par rapport au pylône (21) pour l'unité à laser (25).

18. Appareil selon la revendication 2 et 5 et éventuellement l'une des revendications 6 et 7,
caractérisé en ce que l'émetteur (85) est conçu pour émettre des ondes radio ou des ondes ultrasonores et en ce que la différence de temps des ondes lors de leur arrivée au niveau d'au moins deux capteurs (87, 88) est prise comme base pour déterminer le fléchissement, de sorte que l'espacement entre les capteurs (87, 88) est connu.

19. Appareil selon la revendication 1 et éventuellement 3, 4 ou 5,
caractérisé en ce que
le dispositif de détection a la forme d'un appareil de prise de vues (97),
un objet d'imagerie (93) ayant une forme géométrique bien définie est monté sur le conducteur (3) dans le champ de vision (90) de l'appareil de prise de vues, de préférence au niveau du point le plus bas de la portée de la ligne, et
en association avec l'appareil de prise de vues (97), il y a des moyens (101, 103) pour un traitement d'image ou une reconnaissance de forme d'une manière connue en soi, pour déterminer le fléchissement (H).

20. Appareil selon la revendication 19,
caractérisé par un émetteur (100) pour illuminer l'objet d'imagerie (93), de préférence sous la forme d'un éclair lumineux.

21. Appareil selon l'une quelconque des revendications 2 à 7,
caractérisé en ce que l'émetteur est une source de lumière, de préférence une unité à laser (125) et en ce que le dispositif de détection est un appareil de prise de vues de ligne (129) associé à une optique cylindrique (132) ayant un axe orienté à la verticale.
